# EUROPEAN PATENT SPECIFICATION

(11) **EP 0 673 596 B1**
(45) Date of publication and mention of the grant of the patent: **21.05.2003**
(21) Application number: 95200606.2
(22) Date of filing: 14.03.1995
(51) Int. Cl.: A01J 7/00

(54) **A construction including an implement for milking animals**
Konstruktion mit Gerät zum Melken von Tieren
Construction avec dispositif pour la traite d'animaux

(30) Priority: 25.03.1994 NL 9400472
(43) Date of publication of application: 27.09.1995
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 360 354
- EP-A- 0 448 132
- EP-A- 0 551 956
- EP-A- 0 565 189

## Description

The present invention relates to a construction according to the preamble of claim 1.

EP-0 565 189 relates to a construction in which the teat cups are movable in pairs in fixed box-like protection members in an approximately horizontal plane. Such a construction has, a/o, the disadvantage that the longitudinal movement of the teat cups is limited. Also the construction is unnecessarily complicated.

EP-0 189 954 describes a construction in which the teat cups are individually movable relative to each other in an approximately horizontal plane. This construction has the drawback that if the teats are located further apart or closer together, a different implement would be required.

The present invention has for objective to overcome these drawbacks. In order to realize an efficient connecting and disconnecting of the teat cups, whilst more in particular during disconnecting the physical conditions of a specific animal are to be taken into account, the construction according to the invention is according to claim 1.

In accordance with a further feature of the invention, the teat cup may then include a sleeve which is freely rotatable about the exterior housing of the teat cup, the teat cup being coupled to the robot arm by means of this sleeve. In this situation, a teat cup may be connected to a pivotal arm with the aid of a pulling element, such as a cable or cord. The pulling element may extend through or along the pivotal arms, by means of which element the teat cup is connected to the robot arm, and the pulling element is further connected to an operating cylinder, preferably a pneumatic one, which is disposed in the robot arm. The pulling element will then act on the sleeve. The sleeve is preferably provided with a bulging portion which, when the teat cup has been pulled up against the relevant pivotal arm, fits in a recess provided in the end of this arm.

For a better understanding of the invention and to show how the same may be carried into effect, reference will now be made, by way of example, to the accompanying drawings, in which:
Figure 1 is a plan view of a milking box incorporating a milking robot and showing the contours of a milch animal, a cow in the present case;
Figure 2 shows, to an enlarged scale, the end of the milking robot of Figure 1, wherein two pairs of teat cups are coupled to the end of a robot arm, each via a separate pivotal arm construction;
Figure 3 is a side view of the end of the robot arm in the direction of the arrow III in Figure 2;
Figure 4 illustrates a teat cup and the manner in which it is connected to the end of a pivotal arm of the milking robot;
Figure 5 is a cross-sectional view taken on the line V-V in Figure 2, and
Figure 6 shows four positions the teat cups can assume with respect to the end of the robot arm.

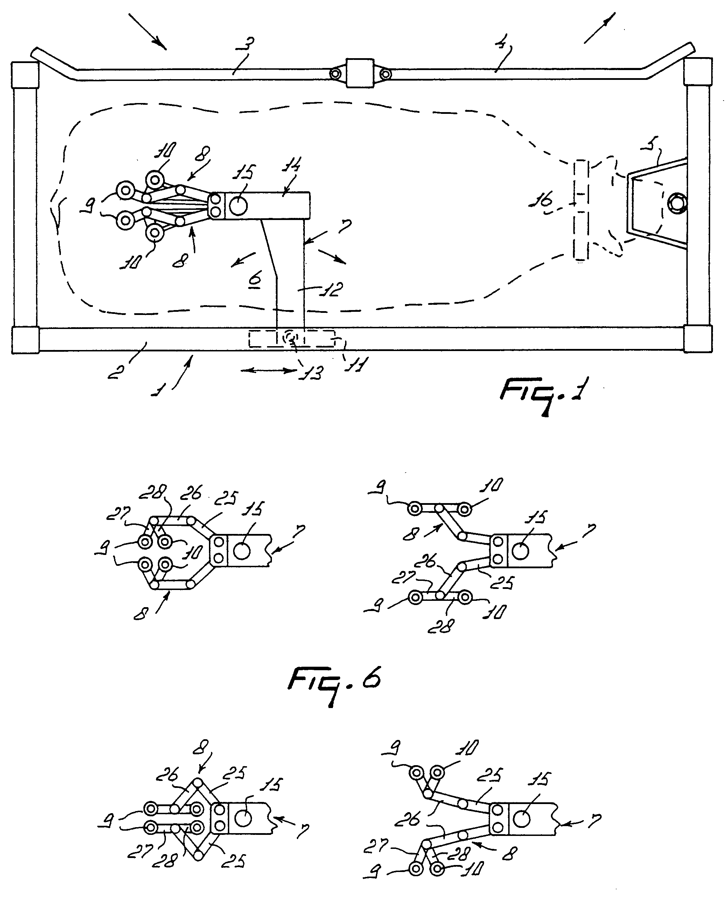

Figure 1 is a plan view of a milking box 1, which includes a railing 2 and at one side is provided with an entrance door 3 and an exit door 4. A feed trough 5 is fastened to the railing 2 at the leading side of the milking box 1. At the side facing the entrance door and the exit door there is a milking robot 6. The milking robot 6 includes a robot arm 7, to whose end teat cups 9 and 10 are connected with the aid of two pivotal arm constructions 8. This robot arm 7 is assembled from a first portion 11 which is arranged such at the side of the milking box that it is movable in the longitudinal direction of the milking box 1, a second portion 12 which is rotatable with respect to the first portion 11 about an upwardly directed shaft 13, and a third portion 14 which is rigidly connected to the second portion 12 at a substantially square angle. The robot arm 7 can be moved upwards as an integral whole by means of a (non-shown) cylinder. Also moving the robot arm 7 in the longitudinal direction of the milking box 1 and rotating the second robot arm portion 12 about the shaft 13 is effected with the aid of (non-shown) cylinders. These cylinders may be either hydraulic, pneumatic or electromechanical ones. A detector 15, e.g. a laser detector, is accommodated on the third robot arm portion 14, with the aid of which detector the position of the teats of an animal to be milked is determined. The pivotal arm constructions 8, at the end of each of which a teat cup 9 and 10 is fitted, are pivotally connected to the end of the third robot arm portion 14. In addition, a collar including a transponder 16, which is part of a (non-shown) cow identification system, is provided around the neck of the cow, which transponder co-operates with a sensor which may be placed near the feed trough 5 and is in connection with the computer of the system.

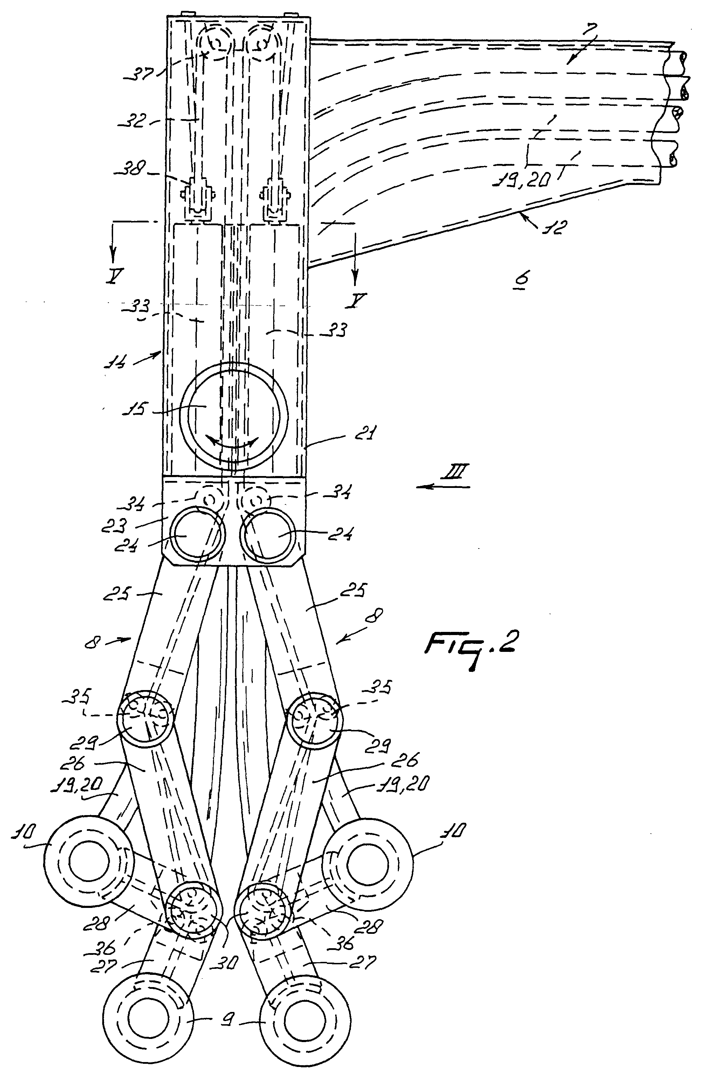

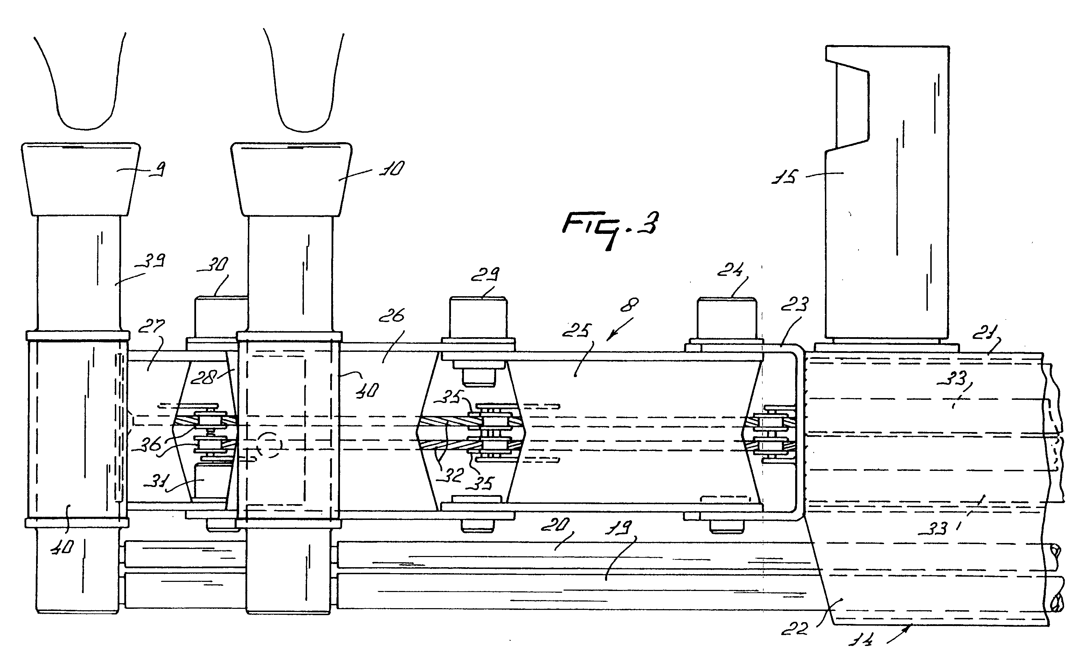

Figures 2 and 3 are a detailed representation of the end of the robot arm 7 with the pivotal constructions 8. The second portion 12 of the robot arm 7 consists of a first box-like beam and a second box-like beam disposed thereunder. The milk tubes 19 and the pulsation tubes 20 of the teat cups 9 and 10 are stored in the second box-like beam. Rigidly connected to the second robot arm portion 12 there is the third robot arm portion 14. Also this third robot arm portion 14 includes a first box-like beam 21 and, arranged thereunder, a second box-like beam 22, these box-like beams 21 and 22 being in connection with the box-like beams of the second robot arm portion 12. Also here, the milk tubes 19 and the pulsation tubes 20 extend through the lower box-like beam 22. The laser detector 15 is disposed pivotably or rotatably on the third robot arm portion 14. A holder 23 is secured to the end of the third robot arm portion 14, in which holder the two pivotal arm constructions 8 are accommodated such that they are rotatable about predominantly vertically extending pivot shafts. The pivotal arm constructions 8 can be rotated with respect to the holder 23 with the aid of electric motors 24, which are in the form of stepping motors. Each of the two pivotal arm constructions 8 includes four pivotal arms 25, 26, 27 and 28. The pivotal arms 25 are rotatable in a predominantly horizontal plane with respect to the third robot arm portion 14 with the aid of the stepping motors 24. The pivotal arms 26 are rotatable in a predominantly horizontal plane with respect to the arms 25 with the aid of electric motors, more specifically stepping motors 29. The arms 27 and 28 are both capable of rotating in a predominantly horizontal plane relative to the arms 26 with the aid of electric motors, more specifically stepping motors 30 and 31, whose shafts are in alignment. The stepping motors 24, 29, 30 and 31 are disposed in the pivot points of the pivotal arm constructions 8, with the aid of which the teat cups 9 and 10 have been coupled to the robot arm 7.

With the aid of the two pivotal arm constructions 8, each assembled from four pivotal arms 25, 26, 27 and 28 and four stepping motors 24, 29, 30 and 31, the teat cups 9 and 10 can be moved in many configurations under the udder with respect to a robot arm 7 with detector 15 which is placed in a stationary position under the animal. The detector 15 is thereby located in a fixed position relative to the milking box 1, which promotes searching for and finding the teats. Figure 6 shows four of such configurations. By moving the milking robot 6 in the longitudinal direction of the milking box 1 and by pivoting the robot arm 7 about the upright shaft 13, the robot arm 7 and consequently the detector 15 can always be placed in such a manner under the animal that by operating the stepping motors 24, 29, 30 and 31 the teat cups 9 and 10 can be moved to under the teats of the animal to be milked, so that they can be connected by an upward motion of the robot arm 7 and by a vacuum produced in the teat cups. After the teat cups have been connected, the robot arm 7 can be moved downwardly and slightly forwardly. The teat cups 9 and 10 connected to the teats remain in this situation in connection with the robot arm 7 by means of a flexible pulling element 32, e.g. a cable or cord. One end of this pulling element 32 is connected to a teat cup 9, 10 and the other end to a cylinder accommodated in the third robot arm portion 14, which cylinder may be a pneumatic, hydraulic or electromechanical one. The cylinders provided for all four teat cups are denoted in Figures 2 and 5 by reference numeral 33. When the teat cups 9 and 10 are in the state in which they are not connected to the teats of an animal, they are pulled by the cylinders 33 and the pulling element 32 up against the end of the respective pivotal arms 27 and 28. As soon as the teat cups have been connected to the teats, the cylinders 33 are released, so that the robot arm 7 can be moved; the teat cups continue to be freely movable with respect to the robot arm 7. When a given udder quarter has been stripped, which may be detected with the aid of a flow sensor in the relevant milk line, then the vacuum in the relevant teat cup is removed and simultaneously the relevant cylinder 33 is energized, so that, when the teat cup drops from the teat, it is immediately pulled up against the end of the relevant pivotal arm 27 or 28. Since the various pivotal arms are movable relative to each other and in conjunction movable relative to the third robot arm portion 14, in which the cylinders 33 are accommodated, it is not well feasible to connect the pulling element 32 directly from the point of connection at the teat cup to the relevant cylinder. The pulling element 32 must be threaded along a plurality of pulleys near the pivot points between the pivotal arms relative to each other and of the pivotal arms 25 and the third robot arm portion 14. For each pivotal arm construction 8 there is a set of pulleys for each of the two pulling elements 32, by means of which a teat cup 9 and a teat cup 10 are connected to two cylinders 33 located one above the other inside the third robot arm portion 14. For both pulling elements 32 these sets of pulleys are located one above the other. A set of pulleys includes one pulley 34 arranged near the pivot point between a pivotal arm construction 8 and the third robot arm portion 14, a pair of pulleys 35 near the pivot point between the pivotal arms 25 and 26 and a pair of pulleys 36 near the pivot point between the pivotal arm 26 on the one hand and the respective pivotal arms 27 and 28 on the other hand. By successively passing a pulling element 32 from its point of connection at a teat cup between two pulleys 36 and two pulleys 35 and thereafter around a pulley 34 to the point of connection at the relevant cylinder 33, the pulling element 32 is accommodated in such a manner in the pivotal arm construction 8 that the freedom of motion of the teat cups relative to the robot arm 7 continues to be ensured to the best possible extent, when these cups are moved in predetermined configurations to under the teats of an animal. In particular, various configurations, such as those shown in Figure 6, can be obtained without any difficulties. The points of connection of the pulling elements 32 at the operating cylinders 33 are located at that side of the third robot arm portion 14 that is remote from the pivotal arm constructions 8. Each of the pulling elements extends from a teat cup between pairs of pulleys 36 and 35 and along a pulley 34 through the entire third robot arm portion 14 to the rear side thereof and from there via a pulley 37 to a pulley 38 disposed at the rear side of the cylinder and from there to the rear wall of the third robot arm portion 14. By passing the pulling element 32 along the pulleys 37 and 38 there is effected an extra large stroke of the pulling element relative to the much more limited stroke of the operating cylinder 33.

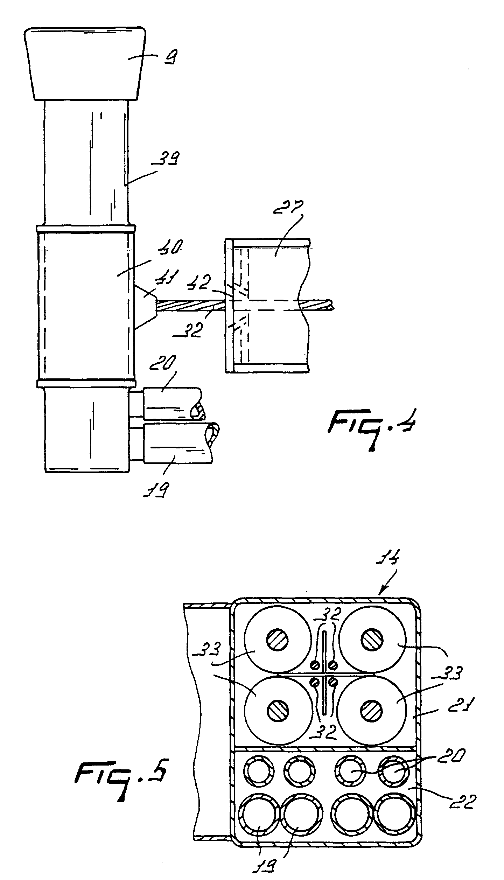

With the ample freedom of motion of the teat cups 9 and 10 with respect to the robot arm 7, it is advantageous when the milk and/or pulsation tubes 19 and 20, respectively, connected to the teat cup allow this freedom of motion of the teat cups to the best possible extent. To achieve this, the teat cups are connected to the pivotal arm constructions 8 capably of rotating freely about their own longitudinal axis. As is shown in Figure 4, this is effected by disposing a sleeve 40 around the exterior housing 39 of the teat cups. The pulling element 32 then acts on the sleeve 40. Because of the capability of the teat cup to rotate freely in the sleeve 40, the milk and/or pulsation tubes allow the pivotal arms to move umimpededly in a pivotal arm construction. So as to render it possible for the sleeve 40 to be pulled in the appropriate manner against the end of the relevant pivotal arm of the pivotal arm construction, the sleeve 40 is provided with a recess 41, which co-operates with a seat 42 in the end of a pivotal arm 27 and 28, respectively.

When, after the teat cups have been connected to the teats of the animal to be milked, one of the teat cups drops from its teat, e.g. due to kicking of the animal, then this teat cup is immediately pulled up against the end of the relevant pivotal arm and it is connected again by determining once again with the aid of the detector the position of the teat from which its cup has dropped. In this situation, the stepping motors of the relevant pivotal arm construction can be controlled such that the loose teat cup is moved to under said teat, whereafter the robot arm is moved upwards and a vacuum is produced in the teat cup until the cup grips the teat. Therefore, the present construction of individually controllable teat cups renders it possible for the teat cups to be connected both simultaneously and each one individually.

## Claims

1. A construction including at least one implement for milking animals, such as cows, while the implement further comprises a robot arm (7), a detector (15) for determining the position of the teats of an animal to be milked, the teat cups (9, 10) being arranged such that they are controllable and movable relative to the detector (15) during the determination of the position of the teats, the attachment of pairs of teat cups (9, 10) to the robot arm (7) including two pivotal arm constructions (8), **characterized in that** a teat cup (9, 10) is attached to the pivotal arm constructions (8) for rotation about its own longitudinal axis.

2. A construction as claimed in claim 1, **characterized in that** a teat cup (9, 10) includes a sleeve (40) which is freely rotatable about the exterior housing (39) of the teat cup (9, 10), the teat cup (9, 10) being coupled to the robot arm (7) via this sleeve (40).

3. A construction as claimed in any one of the preceding claims, **characterized in that** a teat cup (9, 10) is connected to a pivotal arm (27, 28) with the aid of a pulling element (32), such as a cable or cord.

4. A construction as claimed in claim 3, **characterized in that** the pulling element (32) extends through or along the pivotal arms (25 to 28), by means of which element (32) the teat cup (9, 10) is connected to the robot arm (7), and is further connected to an operating cylinder (33), preferably a pneumatic one, which is accommodated in the robot arm (7).

5. A construction as claimed in claim 2 appendant on 3 or 4, **characterized in that** the pulling element (32) acts on the sleeve (40).

6. A construction as claimed in claim 5, **characterized in that** the sleeve (40) has a bulging portion (41) which, when the teat cup (9, 10) has been pulled up against the relevant pivotal arm (27, 28), fits in a recess (42) provided in the end of this arm (27, 28).

7. A construction as claimed in any one of the preceding claims, **characterized in that** at least a number of teat cups (9, 10) is movably connectable to the robot arm (7) by means of movable arms (25 to 28), said implement being provided with milk tubes (19, 20) extending in about the same direction as the arms (25 to 28).

## Patentansprüche

1. Anlage mit mindestens einer Vorrichtung zum Melken von Tieren, wie z. B. Kühen, wobei die Vorrichtung ferner einen Roboterarm (7) und einen Detektor (15) zur Ermittlung der Lage der Zitzen eines zu melkenden Tieres umfaßt, wobei die Zitzenbecher (9, 10) derart angeordnet sind, daß sie während der Ermittlung der Lage der Zitzen steuerbar und relativ zu dem Detektor (15) beweglich sind, wobei die Befestigung der Paare von Zitzenbechern (9, 10) an dem Roboterarm (7) zwei Schwenkarmvorrichtungen (8) aufweist,
**dadurch gekennzeichnet, daß** ein Zitzenbecher (9, 10) an den Schwenkarmvorrichtungen (8) um seine eigene Längsachse drehbar angebracht ist.

2. Anlage nach Anspruch 1,
**dadurch gekennzeichnet, daß** ein Zitzenbecher (9, 10) eine Hülse (40) aufweist, die um den Außenmantel (39) des Zitzenbechers (9, 10) frei drehbar ist, wobei der Zitzenbecher (9, 10) über diese Hülse (40) mit dem Roboterarm (7) verbunden ist.

3. Anlage nach einem der vorhergehenden Ansprüche,
**dadurch gekennzeichnet, daß** ein Zitzenbecher (9, 10) mit einem schwenkbaren Arm (27, 28) durch ein Zugelement (32), wie z. B. ein Kabel oder ein Seil, verbunden ist.

4. Anlage nach Anspruch 3,
**dadurch gekennzeichnet, daß** sich das Zugelement (32) durch oder entlang der schwenkbaren Arme (25 bis 28) erstreckt, wobei der Zitzenbecher (9, 10) durch dieses Element (32) mit dem Roboterarm (7) und außerdem mit einem Arbeitszylinder (33), vorzugsweise einem pneumatischen Arbeitszylinder, verbunden ist, der in dem Roboterarm (7) angeordnet ist.

5. Anlage nach Anspruch 2 in Verbindung mit 3 oder 4,
**dadurch gekennzeichnet, daß** das Zugelement (32) mit der Hülse (40) zusammenwirkt.

6. Anlage nach Anspruch 5,
**dadurch gekennzeichnet, daß** die Hülse (40) eine Ausbuchtung (41) aufweist, die in eine im Ende dieses Armes (27, 28) ausgebildete Ausnehmung (42) hineinpaßt, wenn der Zitzenbecher (9, 10) gegen den entsprechenden Schwenkarm (27, 28) gezogen ist.

7. Anlage nach einem der vorhergehenden Ansprüche,
**dadurch gekennzeichnet, daß** zumindest eine Anzahl von Zitzenbechern (9, 10) mit Hilfe von beweglichen Armen (25 bis 28) mit dem Roboterarm (7) beweglich verbindbar ist, wobei die Vorrichtung mit Milchleitungen (19, 20) versehen ist, die sich in ungefähr dieselbe Richtung wie die Arme (25 bis 28) erstrecken.

## Revendications

1. Construction comprenant au moins un dispositif pour la traite d'animaux laitrers, tels que des vaches, dans laquelle le dispositif comprend également un bras de robot (7), un détecteur (15) pour déterminer la position des trayons d'un animal à traite, les gobelets trayeurs (9, 10) étant installés de telle manière qu'ils soient contrôlables et mobiles par rapport au détecteur (15) durant la détermination de la position des trayons, la fixation de paires de gobelets trayeurs (9, 10) au bras de robot (7) comprenant deux constructions de bras articulés (8), **caractérisée en ce qu'**un gobelet trayeur (9, 10) est fixé aux constructions de bras articulés (8) avec rotation autour de son propre axe longitudinal.

2. Construction selon la revendication 1, **caractérisée en ce qu'**un gobelet trayeur (9, 10) comprend un manchon (40) qui tourne librement autour de l'enveloppe extérieure (39) du gobelet trayeur (9, 10), le gobelet trayeur (9, 10) étant accouplé au bras de robot (7) par l'intermédiaire de ce manchon (40).

3. Construction selon l'une quelconque des revendications précédentes, **caractérisée en ce qu'**un gobelet trayeur (9, 10) est relié à un bras articulé (27, 28) à l'aide d'un élément de traction (32), tel qu'un câble ou une corde.

4. Construction selon la revendication 3, **caractérisée en ce que** l'élément de traction (32) s'étend à travers ou le long des bras articulés (25 à 28), élément (32) au moyen duquel le gobelet trayeur (9, 10) est relié au bras de robot (7), et il est également relié à un cylindre de commande (33), de préférence un cylindre pneumatique, qui est logé dans le bras de robot (7).

5. Construction selon la revendication 2 liée à la revendication 3 ou 4, **caractérisée en ce que** l'élément de traction (32) agit sur le manchon (40).

6. Construction selon la revendication 5, **caractérisée en ce que** le manchon (40) comporte une partie bombée (41) qui, quand le gobelet trayeur (9, 10) a été tiré vers le haut contre le bras articulé (27, 28) correspondant, se loge dans un évidement (42) prévu dans l'extrémité de ce bras (27, 28).

7. Construction selon l'une quelconque des revendications précédentes, **caractérisée en ce qu'**au moins une pluralité de gobelets trayeurs (9, 10) peut être connectée de manière mobile au bras de robot (7) au moyen de bras mobiles (25 à 28), ledit dispositif étant pourvu de tubes de lait (19, 20) qui s'étendent sensiblement dans la même direction que les bras (25 à 28).
